# EUROPÄISCHE PATENTANMELDUNG

(11) **EP 2 803 277 A1**
(43) Veröffentlichungstag der Anmeldung: **19.11.2014**
(21) Anmeldenummer: 14167314.5
(22) Anmeldetag: 07.05.2014
(51) Int. Cl.: A24C 5/00

(54) **Fördervorrichtung für stabförmige Produkte der Tabak verarbeitenden Industrie**

(30) Priorität: 17.05.2013 DE 102013209181
(71) Anmelder: HAUNI Maschinenbau AG, 21033 Hamburg (DE)
(72) Erfinder: Hanebuth, Daniel, 21514 Büchen (DE)
(74) Vertreter: Müller Verweyen

(57) **Zusammenfassung**

Die vorliegende Erfindung betrifft eine Fördervorrichtung zum Fördern stabförmiger Produkte der Tabak verarbeitenden Industrie mit
-einem Längsförderer (1) mit umlaufenden ersten Hebelarmen (4) mit daran angeordneten ersten Aufnahmen (11,12) zum Aufnehmen von längsaxial zugeförderten Produkten und zur Übergabe der Produkte an zweite Aufnahmen (16,17) von zweiten Hebelarmen (16,17) eines rotierenden, die Produkte queraxial abfördernden Querförderers (2), wobei
-die Hebelarme (4) des Längsförderers (1) jeweils um parallel zu den Längsachsen (B) der auf den Bahnen zugeförderten Produkte ausgerichtete Schwenkachsen (A) verschwenkbar sind, und dass
-die ersten Hebelarme (4) während des Umlaufens mittels einer ersten Antriebseinrichtung (27) zu einer gesteuerten periodischen Schwenkbewegung zwischen einer Übernahmestellung (I) und einer Übergabestellung (II) angetrieben werden.

## Beschreibung

Die Erfindung betrifft eine Fördervorrichtung für stabförmige Produkte der Tabak verarbeitenden Industrie mit den Merkmalen des Oberbegriffs von Anspruch 1.

Solche Fördervorrichtungen sind im Stand der Technik bekannt und umfassen unter anderem einen oder mehrere parallele Produktstränge, in denen die Produkte auf parallelen Bahnen kontinuierlich einem Längsförderer zugeführt werden.

Der Längsförderer ist aus einer angetriebenen Trommel mit an der Stirnseite vorstehenden Armen gebildet, welche durch die Drehbewegung der Trommel eine kreisförmige oder elliptische Rotationsbewegung ausführen. An jedem der Arme ist eine der Anzahl der Produktstränge entsprechende Anzahl von Aufnahmen vorgesehen, welche durch in den Armen vorgesehene Druckluftleitungen mit Unterdruck beaufschlagbar sind. Die Aufnahmen sind zueinander und zu den Produktsträngen parallel ausgerichtet und durchlaufen während der Rotationsbewegung des Längsförderers einen Übernahmepunkt, in dem sie den jeweiligen Produktstrang so dicht passieren, dass der in den Aufnahmen vorhandene Unterdruck ausreicht, um ein oder mehrere Produkte des Produktstranges anzusaugen und abzufördern. Die Arme selbst sind drehbar an dem Längsförderer angeordnet und werden zu einer in Bezug zu der Drehrichtung des Längsförderers gegensinnigen Drehbewegung angetrieben, so dass die Aufnahmen an den Armen während der Drehbewegung des Längsförderers eine gleichbleibende Ausrichtung aufweisen.

Ferner ist an der Fördervorrichtung ein Querförderer vorgesehen, welcher die Produkte von dem Längsförderer in einem zweiten Übergabepunkt quer zu der Rotationsebene des Längsförderers von diesem abfördert. Die Produkte müssen dabei bei mehreren parallelen Produktsträngen und damit mehreren Aufnahmen an den Armen des Längsförderers von dem Querförderer aus den parallelen beabstandeten Aufnahmen des Längsförderers entnommen werden, wozu an dem Querförderer wiederum eine Vielzahl von mit Unterdruck beaufschlagbarer Aufnahmen vorgesehen sind. Damit die Produkte aus den parallel zueinander ausgerichteten Aufnahmen der Arme des Längsförderers übernommen werden können, sind eine Teilanzahl der Aufnahmen an dem Querförderer an verschwenkbaren Hebelarmen angeordnet (bei zwei parallelen Produktssträngen wäre dies jede zweite Aufnahme). Das Verschwenken der Hebelarme des Querförderers ist dabei insbesondere deshalb problematisch, da die Hebalarme mit den Aufnahmen zur Übernahme der Produkte aus den Aufnahmen der Hebelarme des Längsförderers, welche näher zu dem Längsförderer angeordnet sind, notwendigerweise die Bewegungskurven der von dem Längsförderer entfernteren Aufnahmen schneiden, so dass sie bei einem nicht synchronisierten Antrieb kollidieren können. Die verschwenkbaren Hebelarme des Querförderers greifen jeweils mit einem freien Ende in eine Steuerkurve einer feststehenden Steuerplatte ein und führen dadurch während der Drehbewegung des Querförderers eine durch die Steuerkurve definierte Schwenkbewegung aus, während der sie von dem Umfang des Querförderers weg in eine Position bewegt werden, in der sie die Aufnahmen des Längsförderers so dicht passieren, dass die Produkte durch den in den Aufnahmen des Querförderers anliegenden Unterdruck angesaugt und von der Aufnahme des Querförderers übernommen werden. Nach der Übernahme der Produkte von dem Querförderer werden die verschwenkbaren Hebelarme aus der ausgeschwenkten Stellung in dem Übergabepunkt wieder auf den Umfang des Querförderers zurück verschwenkt.

Eine solche Fördervorrichtung ist z.B. aus der DE 41 29 672 A1 bekannt.

Die Arme des Längsförderers laufen dabei auf einer elliptischen Bewegungsbahn um und weisen während der Umlaufbewegung eine konstante horizontale Ausrichtung auf. Diese konstante horizontale Ausrichtung kann z.B. mittels eines exzentrisch angetriebenen Taumeltriebes erreicht werden, welcher in der noch nicht veröffentlichten Anmeldung DE 10 2012 201 927.8 beschrieben ist.

Ein Nachteil einer solchen Fördervorrichtung ist darin zu sehen, dass sich die Bewegungsbahnen der Arme des Längsförderers und der verschwenkbaren Hebelarme des Querförderers während des beschriebenen Bewegungsablaufs kreuzen können, wobei die verschwenkbaren Hebelarme des Querförderers und die Arme des Längsförderers auf keinen Fall kollidieren dürfen. Die Arme des Längsförderers mit den daran angeordneten Aufnahmen beschreiben dabei eine durch die Bewegungsbahnen der Aufnahmen begrenzte Hüllkurve, in die die verschwenkbaren Hebelarme des Querförderers hineinbewegt werden müssen, um die Produkte aus den von dem Querförderer entfernteren bzw. zu dem Längsförderer näheren Aufnahmen der Arme des Längsförderers zu entnehmen. Damit ergibt sich ein Überdeckungsabschnitt der Hüllkurve der Bewegungsbahnen der Aufnahmen des Längsförderers und der Bewegungsbahn der verschwenkbaren Hebelarme des Querförderers.

Zur Vermeidung einer Kollision der Hebelarme des Querförderers mit den Armen bzw. den daran angeordneten Aufnahmen des Längsförderers während des Eintauchens in die Hüllkurve ist es daher erforderlich, die Drehbewegungen des Querförderers und des Längsförderers zueinander zu synchronisieren. Dies kann z.B. dadurch erfolgen, indem der Längsförderer und der Querförderer über eine gemeinsame Antriebseinrichtung angetrieben und über ein zwischen dem Längsförderer und dem Querförderer vorgesehenes Getriebe miteinander gekoppelt werden.

Zur Vermeidung dieses Problems muss daher ein erheblicher konstruktiver Aufwand betrieben werden, wodurch die Herstellungskosten der gesamten Vorrichtung erhöht werden. Außerdem stellt die konstruktiv aufwendige Kopplung des Längsförderers und des Querförderers eine die Ausfallwahrscheinlichkeit der gesamten Fördervorrichtung erhöhende mögliche Fehlerquelle dar.

Aus der DE 10 2011 009 384 A1 ist eine Lösung zur Vermeidung dieses Problems bekannt, bei der eine Gruppe von Hebelarmen des Querförderers verschwenkbar ausgeführt sind. Die Schwenkbewegung der Hebelarme ist dabei so gesteuert, dass sie zur Übernahme der Produkte in eine Hüllkurve eintauchen, welche durch die Arme des Längsförderers begrenzt ist, wobei die Bewegung derart gesteuert wird, dass die Aufnahmen der Hebelarme des Querförderers vor und nach dem Eintauchen in die Hüllkurve jeweils auf einem berührungslos zu den Aufnahmen des Längsförderers und deren Bewegungsbahnen verlaufenden Abschnitt einer Bewegungsbahn geführt werden.

Ein Nachteil dieser aus der DE 10 2011 009 384 A1 bekannten Lösung ist es, dass die Hebelarme des Querförderers dabei einen verhältnismäßig großen Schwenkweg ausführen müssen und dabei entsprechend beschleunigt werden müssen, wodurch auf die in den Aufnahmen gehaltenen Produkte entsprechend große Kräfte wirken.

Aufgabe der Erfindung ist es daher, eine Fördervorrichtung bereitzustellen, bei der die oben beschriebene Kollisionsproblematik mit einfachen konstruktiven Mitteln vermieden ist, und bei der die Übernahme und Übergabe der Produkte mit möglichst geringen Kräften realisiert werden kann.

Die Aufgabe wird erfindungsgemäß durch eine Fördervorrichtung mit den Merkmalen von Anspruch 1 gelöst. Weitere bevorzugte Ausgestaltungen der Erfindung sind den Unteransprüchen, den Figuren und der zugehörigen Beschreibung zu entnehmen.

Gemäß dem Grundgedanken der Erfindung wird vorgeschlagen, dass die Hebelarme des Längsförderers jeweils um parallel zu den Längsachsen der auf den Bahnen zugeförderten Produkte ausgerichtete Schwenkachsen verschwenkbar sind, und dass die Hebelarme während des Umlaufens mittels einer ersten Antriebseinrichtung zu einer gesteuerten periodischen Schwenkbewegung zwischen einer Übernahmestellung und einer Übergabestellung angetrieben werden. Durch das Verschwenken der Hebelarme des Längsförderers kann eine kollisionsfreie Bewegung der Aufnahmen dadurch erreicht werden, indem die Aufnahmen der Hebelarme des Längsförderers aus der Übernahmestellung in die Übergabestellung verschwenkt werden, wobei insbesondere die Bewegung der von dem Querförderer entfernteren Aufnahme des Längsförderers in die Übergabestellung wichtig ist. Dadurch ist es im Extremfall möglich, die Hebelarme des Querförderers gar nicht zu verschwenken, sofern die Bewegung der Produkte aus der parallelen horizontalen Ausrichtung der Zuführung in die parallele vertikale Ausrichtung in der Übergabestelle allein durch die Bewegung der Hebelarme des Längsaxialförderers verwirklicht werden kann.

Die Schwenkachse der Hebelarme des Längsförderers kann dabei an der von dem Querförderer abgewandten Seite der Aufnahmen angeordnet sein, so dass die Aufnahme aus der parallelen horizontalen Ausrichtung in der Übernahmestelle des Längsaxialförderers in eine parallele vertikale Ausrichtung zueinander nach oben verschwenkt werden.

Ferner wird vorgeschlagen, dass die Schwenkbewegung der Hebelarme derart ausgelegt ist, dass sich die durch die Längsachsen der in den Aufnahmen des Längsförderers und die Längsachsen der in den Aufnahmen des Querförderers aufnehmbaren Produkte definierten Bewegungskurven in der Übergabestellung der Hebelarme tangieren. Dabei sind die Bewegungskurven die Kurven der Längsachsen im Querschnitt der in den Mulden gehaltenen Produkte bzw. die Mittelpunkte der im Querschnitt zu vollständigen Kreisen verlängerten kreissegmentförmigen Aufnahmen. Durch das Tangieren der Bewegungskurven befinden sich die Aufnahmen in genau einer Winkelstellung, nämlich in der Übergabestellung, in einer Stellung, in der sich die Aufnahmen des Längsförderers und des Querförderers im Querschnitt im Idealfall zu einem Kreis ergänzen bzw. auf einem gemeinsamen Kreis befinden. Dadurch können die Produkte mit geringstmöglichen Querkräften übergeben werden und werden dabei geringstmöglichen Druckkräften ausgesetzt.

Weiter wird vorgeschlagen, dass die erste Antriebseinrichtung eine Nockenkurve umfasst, welche in Bezug zu den ersten Hebelarmen feststehend angeordnet ist, und dass ein den Hebelarmen zugeordneter Nockenfolger vorgesehen ist, welcher an der feststehenden Nockenkurve abläuft und dadurch eine durch die Form der Nockenkurve definierte periodische Bewegung zwischen zwei Endstellungen ausführt, und dass ein Getriebe vorgesehen ist, welches die Bewegung des Nockenfolgers auf die ersten Hebelarme überträgt. Der Nockenfolger ist dabei den Hebelarmen zugeordnet und bevorzugt in Bezug zu der Verlaufsrichtung der Nockenkurve feststehend gegenüber den Hebelarmen angeordnet und erzwingt durch die Anlage an der Nockenkurve während des Umlaufens der Hebelarme eine durch die Form der Nockenkurve definierte Schwenkbewegung der Hebelarme. Die periodische Bewegung des Nockenfolgers wird dann durch das Getriebe z.B. mittels einer Verzahnung an dem Nockenfolger und einem den Hebelarmen zugeordneten Zahnrad in die Schwenkbewegung der Hebelarme umgewandelt. Dadurch kann die Schwenkbewegung der Hebelarme ausschließlich mit mechanischen Mitteln selbststeuernd verwirklicht werden, wobei die Schwenkbewegung sehr einfach durch die Form und Stellung der Nockenkurve definiert werden kann. Sofern eine andere Schwenkbewegung realisiert werden soll, kann die Nockenkurve z.B. auch einfach austauschbar ausgebildet sein, so dass die andere Schwenkbewegung durch den Austausch der Nockenkurve gegen eine Nockenkurve anderer Form unter Verwendung von ansonsten identischen Bauteilen realisiert werden kann. Die Nockenkurve kann dabei insgesamt feststehend ausgebildet sein oder auch nur in Bezug zu den umlaufenden Hebelarmen feststehend ausgebildet sein.

Insbesondere kann an jedem der Hebelarme eine separate Baugruppe aus einer Nockenkurve, einem Nockenfolger und einem Getriebe vorgesehen sein. Diese Lösung ist insofern vorteilhaft, da jeder Hebelarm aufgrund der erforderlichen konstanten horizontalen Ausrichtung der Aufnahme bereits eine zu der Drehrichtung der umlaufenden Trommel gegensinnige Drehbewegung gegenüber der Trommel ausführt, welche in diesem Fall gleichzeitig zum Ablaufen des Nockenfolgers auf der Nockenkurve und zum Erzwingen der Schwenkbewegung genutzt wird. Dadurch erfolgt die Steuerung der Bewegung der Hebelarme unabhängig voneinander. Dabei kann ein und dieselbe Nockenkurve und identische Nockenfolger für die Steuerung der Hebelarme verwendet werden, wobei die Nockenkurve in jeder Baugruppe identisch zu der Drehachse des Längsförderers ausgerichtet ist.

Weiter wird vorgeschlagen, dass die Hebelarme aus der Übernahmestellung in die Übergabestellung um 90 Grad verschwenkbar sind, wobei die Hebelarme bevorzugt aufgrund der in der Übernahmestellung parallelen horizontalen Ausrichtung und der Verschwenkung um 90 Grad in der Übergabestellung parallel zueinander in einer Vertikalebene angeordnet sind.

Ferner wird vorgeschlagen, dass die Hebelarme während des Umlaufens des Längsförderers mittels einer zweiten Antriebseinrichtung zu einer zu der Drehbewegung des Längsförderers gegensinnigen Drehbewegung angetrieben werden, und die erste Antriebseinrichtung in die zweite Antriebseinrichtung integriert ist. Die erste Antriebseinrichtung und die zweite Antriebseinrichtung bilden damit bewegungstechnisch eine Baueinheit, wobei die erste Antriebseinrichtung durch die Integration in die zweite Antriebseinrichtung die Bewegung der zweiten Antriebseinrichtung mit ausführt. Dadurch überlagern sich die durch die erste Antriebseinrichtung und die durch die zweite Antriebsreinrichtung erzwungenen Bewegungsabläufe. Der Gesamtbewegungsablauf der Hebelarme kann dadurch durch eine individuelle Auslegung der ersten und der zweiten Antriebseinrichtung vereinfacht ausgelegt werden.

Weiter wird vorgeschlagen, dass die Aufnahmen des Querförderers aus einer Umlaufstellung paar- oder gruppenweise in die Übergabestellung verschwenkbar sind. Durch das paar- oder gruppenweise Verschwenken der Aufnahmen des Querförderers kann der erforderliche Schwenkweg der Hebelarme bzw. der Aufnahmen des Längsförderers verringert werden. Dadurch können die maximal erforderlichen Schwenkwinkel und Auslenkungen der Hebelarme des Längsförderers verringert werden, wodurch wiederum die Beschleunigungen der Hebelarme und der in den Aufnahmen gehaltenen Produkte und die dadurch bedingten Kräfte verringert werden können. Ferner werden die Aufnahmen des Querförderers bewusst paar- oder gruppenweise verschwenkt, wobei die Anzahl der zusammen verschwenkbaren Aufnahmen des Querförderers der Anzahl der zusammen verschwenkbaren Aufnahmen des Längsförderers entspricht.

In diesem Fall können die Aufnahmen des Querförderers paar- oder gruppenweise mittels eines Koppelgliedes miteinander verbunden sein, so dass die Aufnahmen des Querförderers durch eine gemeinsame Antriebseinrichtung gesteuert werden kann. Ferner kann der Bewegungsablauf der Aufnahmen dadurch insoweit verbessert werden, dass die Aufnahmen immer in einer festen räumlichen Zuordnung und insbesondere in einem festen Abstand zueinander angeordnet sind.

Dabei können die Aufnahmen bevorzugt paarweise mittels zweier über das Koppelglied miteinander verbundener zweiter Hebelarme verschwenkbar sein, welche mit einem freien Ende an einer feststehenden Steuerkurve anliegen, welche durch ihren Verlauf während des Umlaufens der zweiten Hebelarme die Schwenkbewegung steuert. Dadurch kann die Bewegung jeweils zweier über das Koppelglied miteinander verbundener Hebelarme mittels eines gemeinsamen Hebelarmes gesteuert werden.

Weiter wird vorgeschlagen, dass in den ersten Hebelarmen Druckluftleitungen vorgesehen sind, welche in die ersten Aufnahmen münden und in Abhängigkeit von dem Schwenkwinkel der Hebelarme um die Schwenkachse mit Druckluft beaufschlagbar sind. Der Vorteil der vorgeschlagenen Lösung besteht darin, dass die erfindungsgemäß vorgeschlagene Verschwenkbarkeit der ersten Hebelarme um die Schwenkachse auch zur Steuerung der Druckluft in den in die Aufnahmen mündenden Druckluftleitungen genutzt wird, wobei die Druckluft selbstverständlich zusätzlich auch noch in Abhängigkeit von der Drehwinkelstellung der Hebelarme in Bezug zu der Drehachse des Längsförderers gesteuert werden kann.

Gemäß einer weiteren bevorzugten Ausführungsform der Erfindung wird vorgeschlagen, dass die Hebelarme des Längsförderers auf einer gemeinsamen Lagerplatte drehbar gelagert sind, und in der Lagerplatte eine Druckluftzuführung vorgesehen ist, durch welche in die Aufnahmen der Hebelarme mündende Druckluftleitungen mit Druckluft beaufschlagbar sind. Die Lagerplatte wird dadurch zusätzlich zu der eigentlichen Funktion der Lagerung als Teil einer zentralen Druckluftzuführung genutzt, wobei die Lagerplatte bevorzugt gegenüber einem feststehenden Steuerflansch mit einer zentralen Druckluftzuführung bewegbar ist und durch Ausbildung entsprechender Steuerkanten und die Positionierung bestimmter Druckluftleitungen eine gesteuerte Druckluftzuführung in Abhängigkeit von der Drehwinkelstellung der Hebelarme zu der Drehachse des Längsförderers ermöglicht.

Weiter wird vorgeschlagen, dass an den ersten Hebelarmen wenigstens zwei parallel zueinander ausgerichtete erste Aufnahmen zum Aufnehmen von zwei oder mehr auf parallelen Bahnen längsaxial zugeförderten Produkten vorgesehen sind. Die vorgeschlagene Ausführungsform weist den Vorteil auf, dass durch das Verschwenken der Hebelarme des Längsförderers insbesondere eine Kollision zwischen den Aufnahmen des Querförderers und den Aufnahmen des Längsförderers vermieden werden kann, welche näher an dem Längsförderer angeordnet sind.

Die Erfindung wird im Folgenden anhand einer bevorzugten Ausführungsform unter Bezugnahme auf die beigefügten Figuren erläutert. Dabei zeigt:
- Fig. 1:: eine erfindungsgemäße Fördervorrichtung in Schrägansicht;
- Fig. 2:: eine erfindungsgemäße Fördervorrichtung in Frontalansicht des Querförderers;
- Fig. 3:: eine vergrößerte Darstellung eines in die Übergabestellung verschwenkten Hebelarmes des Längsförderers mit einer aufgeschnittenen ersten Antriebseinrichtung;
- Fig. 4:: eine vergrößerte Darstellung eines gerade aus der Übernahmestellung verschwenkten Hebelarmes des Längsförderers mit einer aufgeschnittenen ersten Antriebseinrichtung; und
- Fig. 5:: einen vergrößerten Ausschnitt der Fig. 2 mit den eingezeichneten Bewegungskurven der Aufnahmen des Längsförderers und des Querförderers.

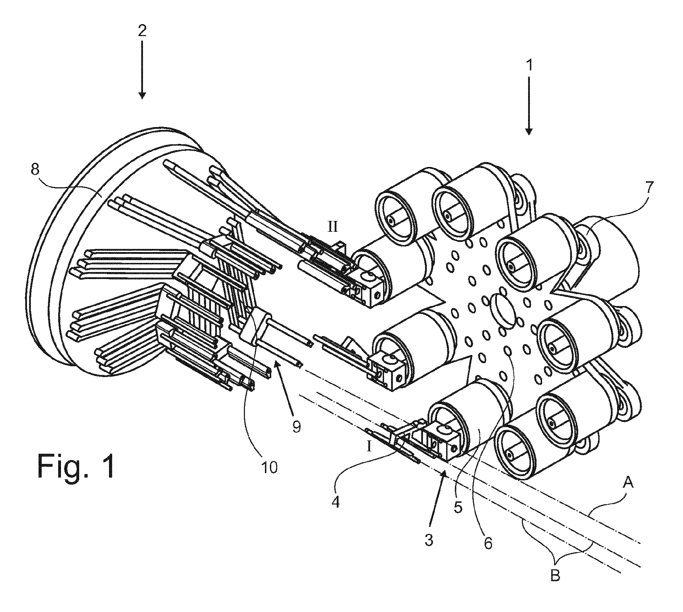

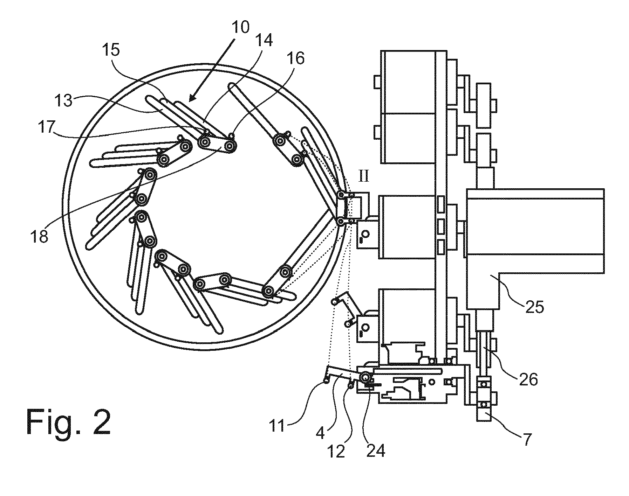

In den Fig. 1 und Fig. 2 ist eine erfindungsgemäße Fördervorrichtung mit einem Längsförderer 1 und einem Querförderer 2 zu erkennen. Dem Längsförderer 1 werden in bekannter Weise Produkte in zwei Strängen mit parallel zueinander und in einer Horizontalebene ausgerichteten Längsachsen B zugeführt. Der Längsförderer 1 umfasst eine rotatorisch angetriebene Lagerplatte 6 und eine mittels eines Exzenters 25 zu einer Taumelbewegung gegenüber der Lagerplatte 6 angetriebene Taumelscheibe 26 mit einer Mehrzahl von gleichmäßig über den Umfang verteilt angeordneten Aufnahmen 7, in denen jeweils ein Hebelarm 4 des Längsförderers 1 drehbar gelagert ist. Die Hebelarme 4 greifen jeweils mit einer Kurbel in die Aufnahmen 7, so dass die Hebelarme 4 aufgrund der Taumelbewegung der Taumelscheibe 26 zu einer gegenüber der Drehbewegung der Lagerplatte 6 gegensinnigen Drehbewegung angetrieben werden, und die Aufnahmen 11 und 12 der Hebelarme 4 trotz der Drehbewegung der Lagerplatte 6, abgesehen von der erfindungsgemäßen, anschließend noch beschriebenen Schwenkbewegung, eine konstante horizontale Ausrichtung aufweisen.

Der Querförderer 2 umfasst eine rotatorisch angetriebene Trommel 8 mit einer Mehrzahl von Hebelarmgruppen 10, deren Bewegung mittels einer nicht dargestellten, feststehenden Steuerplatte mit einer Steuerkontur gesteuert wird.

Der Längsförderer 1 übernimmt die Produkte mit an den Hebelarmen 4 vorgesehenen Aufnahmen 11 und 12 in einer mit I bezeichneten Übernahmestellung und transportiert die Produkte in eine Übergabestellung II, in der die Produkte von Aufnahmen 16 und 17 des Querförderers 2 übernommen werden. Die Übernahme und Übergabe der Produkte in der Übernahmestellung I und der Übergabestellung II wird mittels eines in den Aufnahmen 11,12,16 und 17 gesteuerten Unter- bzw. geringfügigen Überdruckes bewirkt. Der Unter- bzw. Überdruck in den Aufnahmen 11,12,16 und 17 wird im Sinne der Erfindung allgemein als Steuerung der Druckluft bezeichnet, wobei zur Übernahme der Produkte Unterdruck in den Aufnahmen 11,12,16 und 17 und zur Abgabe der Produkte Überdruck in den Aufnahmen 11,12,16 und 17 erzeugt wird. Die Produkte werden dann je nachdem entweder angesaugt oder ausgeblasen.

Die Hebelarmgruppen 10 des Querförderers 2 umfassen dabei jeweils zwei einzelne Hebelarme 13 und 14, welche außen an einem dritten Hebelarm 15 anliegen und über ein Koppelglied 18 an den Enden miteinander verbunden sind. Die Aufnahmen 16 und 17 sind dabei entweder direkt an den Enden der ersten Hebelarme 13 und 14 oder an dem Koppelglied 18 angeordnet, wobei die Anordnung an dem Koppelglied 18 den Vorteil einer festen unveränderbaren und insbesondere von dem Bewegungsablauf unabhängigen Lage der Aufnahmen 16 und 17 zueinander aufweist.

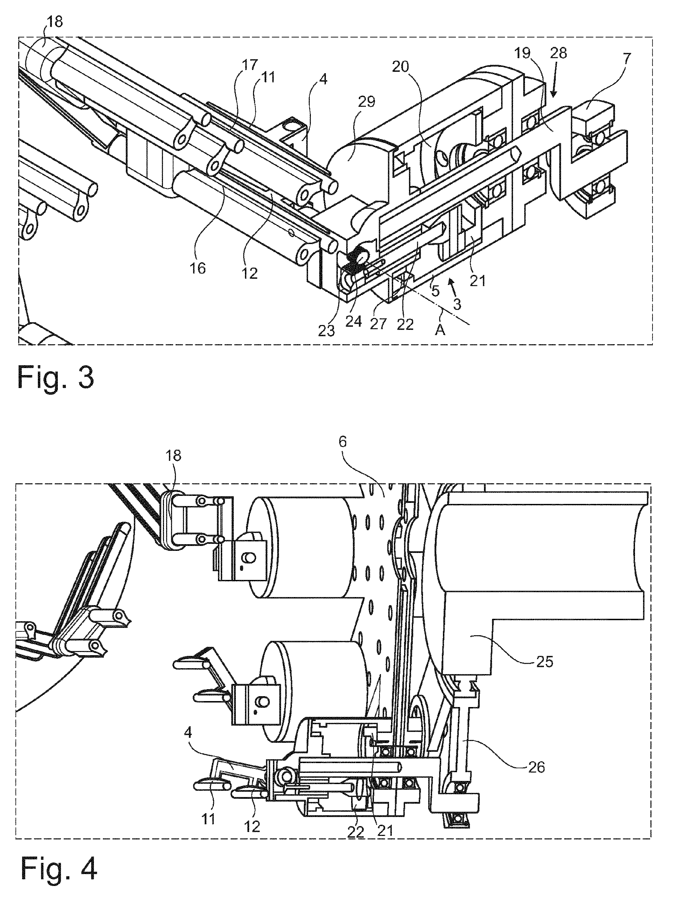

Die Hebelarme 4 weisen jeweils eine in den Fig. 3 und Fig. 4 zu erkennende Welle 19 auf, welche mit ihrem freien Ende mit einer Kurbel in eine Aufnahme 7 der Taumelscheibe 26 eingreift und dadurch während der Taumelbewegung der Taumelscheibe 26 zu der in Bezug zu der Drehbewegung der Lagerplatte 6 gegensinnigen Drehbewegung angetrieben wird. Die über den Exzenter 25 angetriebene Taumelscheibe 26 bildet zusammen mit der über die Kurbeln in die Aufnahmen 7 eingreifenden Welle 19 eine zweite Antriebseinrichtung 28, welche die Hebelarme 4 relativ zu der Lagerplatte 6 antreibt, so dass die Aufnahmen 11 und 12 an den Hebelarmen 4 während der Umlaufbewegung der Hebelarme 4 horizontal ausgerichtet sind.

Die Welle 19 ist Teil einer Hebelarmbaugruppe 3, welche mit einem Gehäuse 5 an der Lagerplatte 6 befestigt ist. Die Welle 19 ist an ihrem frontseitig aus dem Gehäuse 5 herausgeführten Ende drehfest mit einer Gehäuseplatte 29 verbunden, an der jeweils ein Hebelarm 4 schwenkbar um eine Schwenkachse A gehalten ist. In dem Gehäuse 5 der Hebelarmbaugruppe 3 ist ferner eine erste Antriebseinrichtung 27 vorgesehen, welche eine in dem Gehäuse 5 feststehend angeordnete Nockenkurve 20 mit einem vorstehenden Nocken 21 und einen an der Nockenkurve 20 anliegenden Nockenfolger 22 umfasst. Der Nockenfolger 22 ist an der Gehäuseplatte 29 in einem Abstand zu der Welle 19 angeordnet und läuft aufgrund der Drehbewegung der Gehäuseplatte 29 bzw. der Welle 19 in Anlage an der Nockenkurve 20 um. Dabei wird der Nockenfolger 22 beim Überfahren des Nockens 21 zu einer linearen Axialbewegung in dem Gehäuse 5 gezwungen, welche mittels eines Getriebes 23 in eine Drehbewegung eines drehfest mit dem Hebelarm 4 verbundenen Zahnrades 24 umgewandelt wird. Durch die Drehbewegung des Zahnrades 24 wird dann die Schwenkbewegung des Hebelarmes 4 bewirkt. Die Nockenkurve 20 bildet zusammen mit dem Nockenfolger 22 und dem Getriebe 23 die erste Antriebseinrichtung 27, welche aufgrund der Halterung des Nockenfolgers 22 an der von der Welle 19 angetriebenen Gehäuseplatte 29 in die zweite Antriebseinrichtung 28 integriert ist, so dass sich die Bewegungen des Hebelarmes 4, welche durch die erste und die zweite Antriebseinrichtung 27 und 28 erzwungen werden, überlagern. Zusätzlich wird diesen Bewegungen des Hebelarmes 4 natürlich noch die Drehbewegung der Lagerplatte 6 überlagert. Die Druckluftversorgung der an dem Hebelarm 4 vorgesehenen Aufnahmen 11 und 12 erfolgt ausgehend von einer in der Fig. 4 zu erkennenden Druckluftleitung in der Lagerplatte 6 durch die Welle 19 und den Hebelarm 4 zu den Aufnahmen 11 und 12 hin.

In der Fig. 4 ist eine aufgeschnittene Hebelarmbaugruppe 3 in einer Stellung zu erkennen, in der gerade zwei Produkte von den Aufnahmen 11 und 12 übernommen wurden. Der Nockenfolger 22 liegt an einem tiefen Abschnitt der Nockenkurve 20 an, so dass der Hebelarm 4 erst geringfügig verschwenkt ist. Während der weiteren Umlaufbewegung des Hebelarmes 4 gelangt der Nockenfolger 22 aufgrund der relativen Drehbewegung des Hebelarmes 4 zu der Lagerplatte 6 an dem Nocken 21 zur Anlage, wie in der Fig. 3 zu erkennen ist, und wird dadurch linear verschoben. Die Bewegung des Nockenfolgers 22 wird dann mittels des Getriebes 23, gebildet durch eine Verzahnung an dem Nockenfolger 22 und das in die Verzahnung eingreifende Zahnrad 24, in die Schwenkbewegung des Hebelarmes 4 umgewandelt.

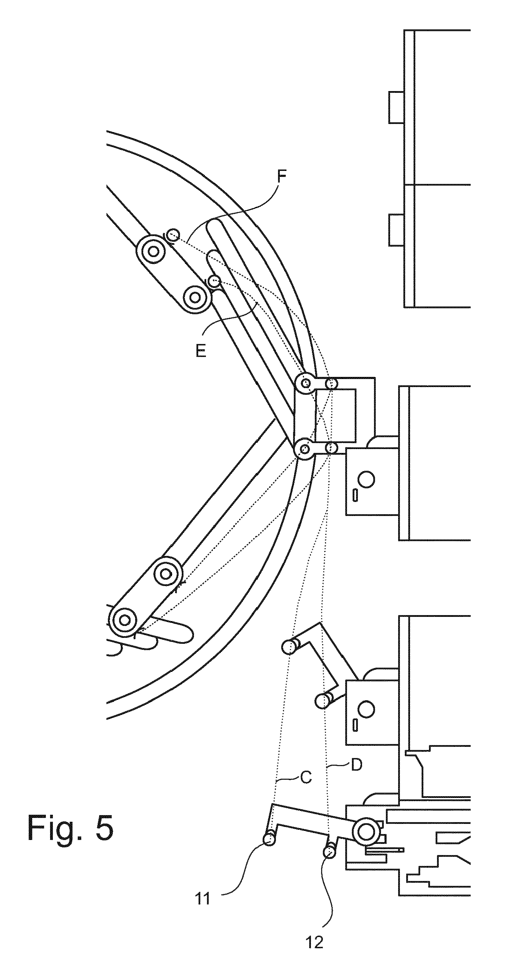

Diese Schwenkbewegung der Hebelarme 4 des Längsförderers 1 ist in der Fig. 2 und vergrößert in der Fig. 5 anhand der Bewegungskurven C und D zu erkennen. Die Bewegungskurven C und D sind dabei die Kurven, auf denen die Längsachsen der in den Aufnahmen 11 und 12 gehaltenen Produkte während der Schwenkbewegung bewegt werden. Dabei werden die Produkte aus einer horizontalen parallelen Ausrichtung in einer Übernahmestellung I in eine vertikale parallele Ausrichtung in eine Übergabestellung II bewegt.

Gleichzeitig führen die Hebelarmgruppen 10 während des Umlaufens der Trommel 8 ebenfalls eine Schwenkbewegung aus, während der sie ebenfalls in eine Ausrichtung in die Übergabestellung II mit vertikal und parallel zueinander angeordneten Aufnahmen 16 und 17 bewegt werden, und zwar derart, dass die Aufnahmen 16 und 17 zeitgleich zu den Aufnahmen 11 und 12 der Hebelarme 4 des Längsförderers 1 in der Übergabestellungen II angeordnet sind. Damit ergibt sich ein kurzes Zeitfenster, in dem die Aufnahmen 11 und 17 bzw. 12 und 16 paarweise an den Produkten anliegen. Die Produkte werden in diesem Zeitfenster dann durch eine entsprechende unterschiedliche Druckbeaufschlagung der Aufnahmen 11,12,16 und 17 von dem Längsförderer 1 an den Querförderer 2 übergeben. Die Bewegungskurven der Mittelpunkte der im Querschnitt kreisbogenabschnittsförmigen zu vollständigen Kreisen ergänzten Aufnahmen 16 und 17 der Hebelarmgruppen 10 sind durch die gestrichelten Linien E und F in den Fig. 2 und Fig. 5 dargestellt.

Wie in den Fig. 2 und Fig. 5 zu erkennen ist, tangieren sich die Bewegungskurven C und F bzw. D und E paarweise in der Übergabestellung II der Aufnahmen 11,12,16 und 17, ohne sich zu kreuzen, d.h. die Aufnahmen 11,12,16 und 17 werden kollisionsfrei bewegt.

Wie in der Fig. 5 zu erkennen ist, werden die ersten Hebelarme 4 des Längsförderers 1 derart verschwenkt, dass die Aufnahmen 11 und 12 kurz vor dem Erreichen der Übergabestellung II vertikal zueinander ausgerichtet sind, so dass die Bewegungskurven C und D über einen kurzen Abschnitt auf einer gemeinsamen vertikalen Linie verlaufen, und die Bewegungskurven E und F der Aufnahmen 16 und 17 die Bewegungskurven C und D nur tangieren und nicht, wie bisher im Stand der Technik, kreuzen. Dadurch ist die Kollision der ersten Hebelarme 4 und der Hebelarmgruppen 10 unabhängig von der Synchronisierung der beiden Antriebe des Längsförderers 1 und des Querförderers 2 praktisch ausgeschlossen.

Wichtig bei der vorgeschlagenen Lösung ist es, dass insbesondere die von dem Querförderer 2 entferntere Aufnahme 12 des Längsförderers 1 nunmehr sehr viel einfacher von der korrespondierenden Aufnahme 16 erreicht werden kann, da die Aufnahmen 11 und 12 in der Übergabestellung II, statt wie bisher horizontal, nunmehr vertikal zueinander angeordnet sind.

Dadurch kann der Bewegungsablauf der Hebelarmgruppen 10 des Querförderers 2 wesentlich einfacher gestaltet werden, und die erforderlichen Schwenkwege und Schwenkwinkel der Hebelarmgruppen 10 erheblich verringert werden. Ferner werden die Aufnahmen 11 und 12 des Längsförderers 1 bewusst paarweise und die Aufnahmen 16 und 17 ebenfalls paarweise mit jeweils einem konstanten Abstand zueinander verschwenkt, so dass die Produkte immer paarweise, zeitgleich und in einem konstanten Abstand zueinander übergeben werden.

Dabei können die Hebelarmbaugruppen 3 mittels einer Dauerfettschmierung geschmiert werden, so dass ein bisher erforderlicher Anschluss an einen Ölkreislauf nicht erforderlich ist.

Da die Hebelarme 4 nach der Übernahme der Produkte aus der Übernahmestellung I verschwenkt werden, kann der Längsförderer 1 auch bei einem Formatwechsel auf Produkte mit einer größeren Stocklänge einfacher betrieben werden, da durch das Verschwenken der Aufnahmen 11 und 12 der Hebelarme 4 die Gefahr einer Kollision der darin gehaltenen Produkte mit den zugeförderten Produkten verringert werden kann.

Ferner kann die Bewegungsellipse der Aufnahmen 11 und 12 aus der Rotation des Längsförderers 1 und der Rotation der Hebelarme 4 um ihre Drehachsen durch das erfindungsgemäße Verschwenken der Aufnahmen 11 und 12 insofern verbessert werden, dass die Differenz der Längen der Hauptachsen der Bewegungsellipse geringer ist, oder die Aufnahmen 11 und 12 sogar auf einem Kreis bewegt werden. Dadurch kann der Abbremsvorgang der Produkte aus der Übernahmestellung I in die Übergabestellung II homogener gestaltet werden. Ferner sind die Hebelarme 4 des Längsförderers 1 durch eine in Umfangsrichtung der Welle 19 wirkende Drehfeder spielfrei gelagert.

Die Erfindung wurde anhand einer Doppelstrangmaschine erläutert, es ist jedoch aus dem Bewegungsablauf klar ersichtlich, dass die erfindungsgemäße Lösung auch auf eine Einstrangmaschine oder eine Maschine mit mehr als zwei parallelen Strängen anwendbar ist.

## Patentansprüche

1. Fördervorrichtung zum Fördern stabförmiger Produkte der Tabak verarbeitenden Industrie mit
- einem Längsförderer (1) mit umlaufenden ersten Hebelarmen (4) mit daran angeordneten ersten Aufnahmen (11,12) zum Aufnehmen von längsaxial zugeförderten Produkten und zur Übergabe der Produkte an zweite Aufnahmen (16,17) von zweiten Hebelarmen (16,17) eines rotierenden, die Produkte queraxial abfördernden Querförderers (2),
**dadurch gekennzeichnet, dass**
- die Hebelarme (4) des Längsförderers (1) jeweils um parallel zu den Längsachsen (B) der auf den Bahnen zugeförderten Produkte ausgerichtete Schwenkachsen (A) verschwenkbar sind, und dass
- die ersten Hebelarme (4) während des Umlaufens mittels einer ersten Antriebseinrichtung (27) zu einer gesteuerten periodischen Schwenkbewegung zwischen einer Übernahmestellung (I) und einer Übergabestellung (II) angetrieben werden.

2. Fördervorrichtung nach Anspruch 1, **dadurch gekennzeichnet, dass**
- die Schwenkachse (A) der ersten Hebelarme (4) an der von dem Querförderer (2) abgewandten Seite der ersten Aufnahmen (11,12) angeordnet ist.

3. Fördervorrichtung nach einem der vorangegangenen Ansprüche, **dadurch gekennzeichnet, dass**
- die Schwenkbewegung (A) der ersten Hebelarme (4) derart ausgelegt ist, dass sich die durch die Längsachsen (B) der in den ersten Aufnahmen (11,12) des Längsförderers (1) und die Längsachsen (G) der in den zweiten Aufnahmen (16,17) des Querförderers (2) aufnehmbaren Produkte definierten Bewegungskurven (C,D,E,F) in der Übergabestellung (II) der Hebelarme (4) tangieren.

4. Fördervorrichtung nach einem der vorangegangenen Ansprüchen, **dadurch gekennzeichnet, dass**
- die erste Antriebseinrichtung (27) eine Nockenkurve (20) umfasst, welche in Bezug zu den ersten Hebelarmen (4) feststehend angeordnet ist, und
- ein Nockenfolger (22) vorgesehen ist, welcher an der feststehenden Nockenkurve (20) abläuft und dadurch eine durch die Form der Nockenkurve (20) definierte periodische Bewegung zwischen zwei Endstellungen ausführt, und
- ein Getriebe (23) vorgesehen ist, welches die Bewegung des Nockenfolgers (22) auf die ersten Hebelarme (4) überträgt.

5. Fördervorrichtung nach Anspruch 4, **dadurch gekennzeichnet, dass**
- an jedem der ersten Hebelarme (4) eine separate Baugruppe aus einer Nockenkurve (20), einem Nockenfolger (22) und einem Getriebe (23) vorgesehen ist.

6. Fördervorrichtung nach einem der vorangegangenen Ansprüche, **dadurch gekennzeichnet, dass**
- die ersten Hebelarme (4) aus der Übernahmestellung (I) in die Übergabestellung (II) um 90 Grad verschwenkbar sind.

7. Fördervorrichtung nach Anspruch 6, **dadurch gekennzeichnet, dass**
- die ersten Aufnahmen (11,12) der ersten Hebelarme (4) in der Übernahmestellung (I) in einer horizontalen und in der Übergabestellung (II) in einer vertikalen Ebene angeordnet sind.

8. Fördervorrichtung nach einem der vorangegangenen Ansprüche, **dadurch gekennzeichnet, dass**
- die ersten Hebelarme (4) während des Umlaufens des Längsförderers (1) mittels einer zweiten Antriebseinrichtung (28) zu einer zu der Drehbewegung des Längsförderers (1) gegensinnigen Drehbewegung angetrieben werden, und
- die erste Antriebseinrichtung (27) in die zweite Antriebseinrichtung (28) integriert ist.

9. Fördervorrichtung nach einem der vorangegangenen Ansprüche, **dadurch gekennzeichnet, dass**
- die zweiten Aufnahmen (16, 17) des Querförderers (2) aus einer Umlaufstellung paar- oder gruppenweise in die Übergabestellung (II) verschwenkbar sind.

10. Fördervorrichtung nach Anspruch 9, **dadurch gekennzeichnet, dass**
- die zweiten Aufnahmen (16,17) des Querförderers (2) paaroder gruppenweise mittels eines Koppelgliedes (18) miteinander verbunden sind.

11. Fördervorrichtung nach einem der vorangegangenen Ansprüche, **dadurch gekennzeichnet, dass**
- in den ersten Hebelarmen (4) Druckluftleitungen vorgesehen sind, welche in die ersten Aufnahmen (11,12) münden und in Abhängigkeit von dem Schwenkwinkel der Hebelarme (4) um die Schwenkachse (A) mit Druckluft beaufschlagbar sind.

12. Fördervorrichtung nach einem der vorangegangenen Ansprüche, **dadurch gekennzeichnet, dass**
- die ersten Hebelarme (4) des Längsförderers (1) auf einer gemeinsamen Lagerplatte (6) drehbar gelagert sind, und
- in der Lagerplatte (6) eine Druckluftzuführung vorgesehen ist, durch welche in die ersten Aufnahmen (11,12) der ersten Hebelarme (4) mündende Druckluftleitungen mit Druckluft beaufschlagbar sind.

13. Fördervorrichtung nach einem der vorangegangenen Ansprüche, **dadurch gekennzeichnet, dass**
- an den ersten Hebelarmen (4) wenigstens zwei parallel zueinander ausgerichtete erste Aufnahmen (11,12) zum Aufnehmen von zwei oder mehr auf parallelen Bahnen längsaxial zugeförderten Produkten vorgesehen sind.
